Europäisches Patentamt

European Patent Office

Office européen des brevets

(11) Veröffentlichungsnummer: **0 391 134**
**A2**

(12) **EUROPÄISCHE PATENTANMELDUNG**

(21) Anmeldenummer: **90105298.5**

(22) Anmeldetag: **21.03.90**

(51) Int. Cl.⁵: **C08G 18/62, C08J 5/18**

(30) Priorität: **01.04.89 DE 3910505**

(43) Veröffentlichungstag der Anmeldung:
**10.10.90 Patentblatt 90/41**

(84) Benannte Vertragsstaaten:
**BE DE FR GB IT NL**

(71) Anmelder: **Th. Goldschmidt AG**
**Goldschmidtstrasse 100 Postfach 101461**
**D-4300 Essen 1(DE)**

(72) Erfinder: **Schäfer, Werner**
**Erftstrasse 94**
**D-4300 Essen-Kettwig(DE)**
Erfinder: **Scheiba, Manfed**
**Breddestrasse 15**
**D-4300 Essen 1(DE)**

(54) **Folie auf Acrylatbasis zur Oberflächenvergütung flächiger Werkstoffe.**

(57) Folie auf der Basis eines wärmehärtbaren oder ausgehärteten Acrylatcopolymerisates zur Oberflächenvergütung flächiger Werkstoffe, insbesondere von Metallblechen, mit erhöhter Reißdehnung, mit dem Merkmal, daß die Folie 20 bis 60 Gew.-% eines Gemisches aus einem hydroxyfunktionellen Polyacrylat eines OH-Äquivalentgewichtes von etwa 200 bis 600 und einem Polyisocyanat eines Polyisocyanat-Äquivalentgewichtes von etwa 150 bis 230 und/ oder die hieraus durch Umsetzung gebildeten Polyacrylaturethane enthält, wobei im Gemisch das hydroxyfunktionelle Polyacrylat und das Isocyanat in, bezogen auf reaktive Gruppen, etwa äquivalenten Mengen vorliegen.

Mit den Folien beschichtete Bleche können ohne Beschädigung des Oberflächenfilmes in engen Radien gebogen oder abgekantet werden.

EP 0 391 134 A2

## Folie auf Acrylatbasis zur Oberflächenvergütung flächiger Werkstoffe

Die Erfindung betrifft eine Folie auf der Basis eines wärmehärtbaren oder ausgehärteten Acrylatcopolymerisates zur Oberflächenvergütung flächiger Werkstoffe, insbesondere von Metallblechen, mit erhöhter Reißdehnung.

Die Erfindung betrifft insbesondere eine Folie auf der Basis eines Acrylatcopolymerisates, welche entweder unter Aushärtungsbedingungen auf die Oberfläche von Metallblechen, insbesondere Blechen aus Aluminiumlegierungen oder Stahl, aufgepreßt werden oder, wenn die Folien bereits ausgehärtet sind, unter Verwendung eines Klebers auf die Oberflächen der Metallbleche aufkaschiert werden. Dabei sollen die erhaltenen Beschichtungen verbesserte Flexibilität und erhöhte Reißdehnung aufweisen, ohne daß die gute Bewitterungsfestigkeit der Beschichtung vermindert wird. Die Reißdehnung der Beschichtung soll insbesondere so erhöht werden, daß die beschichteten Bleche verformt werden können, ohne daß die Beschichtungen mechanisch beschädigt werden.

Wärmehärtbare trägerfreie Folien zur Beschichtung von flächigen Werkstoffen sind z.B. aus der DE-PS 19 61 452 bekannt. Dabei wird eine wärmehärtbare trägerfreie Folie, bestehend aus der Mischung eines elastomeren Mischpolymerisats A und eines hartspröden Mischpolymerisats B auf der Basis von Acrylsäurepolymerisaten beansprucht, bei der das Mischpolymerisat A durch Mischpolymerisation von

a) 70 bis 99 Gewichtsprozent eines Acrylsäurealkylesters, dessen Alkylrest 1 bis 8 Kohlenstoffatome aufweist,

b) 1 bis 20 Gewichtsprozent einer ungesättigten Monocarbonsäure oder eines Anhydrids einer ungesättigten Dicarbonsäure, gegebenenfalls

c) 0 bis 20 Gewichtsprozent eines bei Homopolymerisation ein hartsprödes Polymerisat ergebenden Vinylmonomeren, insbesondere Styrol, Acrylnitril oder Methylmethacrylat, und gegebenenfalls

d) 0 bis 2 Gewichtsprozent eines vernetzenden Monomeren mit mindestens zwei reaktionsfähigen, nicht konjugierten Doppelbindungen im Molekül und das Mischpolymerisat B durch Mischpolymerisation von

a) 60 bis 70 Gewichtsprozent Styrol oder eines Methacrylsäurealkylesters, dessen Alkylrest 1 bis 4 Kohlenstoffatome aufweist,

b) 1 bis 20 Gewichtsprozent eines Glycidylesters der Acryl- oder Methacrylsäure,

c) 1 bis 20 Gewichtsprozent einer ungesättigten Monocarbonsäure oder eines Anhydrids einer ungesättigten Dicarbonsäure, gegebenenfalls

d) 0 bis 20 Gewichtsprozent eines bei Homopolymerisation ein hartsprödes Polymerisat ergebenden Vinylmonomeren, insbesondere Styrol, Acrylnitril oder Methylmethacrylat, und gegebenenfalls

e) 0 bis 3 Gewichtsprozent Vinylpyridin hergestellt worden ist, wobei das Gewichtsverhältnis des elastomeren Copolymerisats A zu dem hartspröden Copolymerisat B 1 : 20 bis 1 : 3 beträgt.

Zum Stand der Technik gehört auch die DE-PS 22 12 928, in der eine wärmehärtbare, lagerbeständige und im ausgehärteten Zustand schlagfeste Folie beschrieben wird, welche besteht aus A einem elastomeren Mischpolymerisat mit einem Glaspunkt von höchstens +10°C oder weniger, das erhalten wurde durch Mischpolymerisation von

a) 70 bis 99 Gewichtsprozent eines Acrylsäurealkylesters mit 1 bis 8 Kohlenstoffatomen im Alkylrest,

b) 1 bis 20 Gewichtsprozent eines Hydroxyalkylesters mit 2 bis 4 Kohlenstoffatomen im Alkylrest und/oder eines Säureamids der Acryl- oder Methacrylsäure und gegebenenfalls

c) 0 bis 2 Gewichtsprozent eines vernetzenden Monomeren mit mindestens zwei reaktionsfähigen, nicht konjugierten Doppelbindungen im Molekül, wobei die Reaktivität der Doppelbindung unterschiedlich sein kann, wobei die Summe von a, b und c 100 Gewichtsprozent ergeben muß, als Pfropfgrundlage, auf das B ein hartsprödes Mischpolymerisat, erhalten durch Mischpolymerisation von

a) 60 bis 80 Gewichtsprozent Styrol und/oder eines Methacrylsäurealkylesters mit 1 bis 20 Kohlenstoffatomen im Alkylrest,

b) 1 bis 20 Gewichtsprozent eines Acrylsäurealkylesters mit 1 bis 8 Kohlenstoffatomen im Alkylrest,

c) 1 bis 20 Gewichtsprozent eines N-Methoxymethylamids der Acryl-und/oder Methacrylsäure,

d) 1 bis 20 Gewichtsprozent eines Hydroxyalkylesters der Acryl-oder Methacrylsäure mit 2 bis 4 Kohlenstoffatomen im Alkylrest,

e) 1 bis 20 Gewichtsprozent Acryl- oder Methacrylsäureamid, wobei das molare Verhältnis der Komponente c zur Summe von d und e etwa 1 : 1 beträgt und das Verhältnis von d : e 4 : 1 bis 1 : 4 ist, und gegebenenfalls

f) 0 bis 20 Gewichtsprozent Acrylnitril, wobei die Summe der Komponenten a bis f 100 Gewichtsprozent ergeben muß, aufgepfropft worden ist, wobei das Gewichtsverhältnis des elastomeren Mischpolymerisats A zu dem hartspröden Mischpolymerisat B 1 : 3 bis 1 : 20 beträgt.

Diese aus dem Stand der Technik bekannten Folien auf Acrylatcopolymerisatbasis werden bei Temperaturen von etwa 130 bis 160° C und einem Druck von etwa 20 bis 100 kp/cm² auf flächige Werkstoffe verpreßt, wobei der Preßdruck 5 bis 20 Minuten aufrechterhalten wird. Man erhält Beschichtungen, deren Glanzgrad dem des Preßbleches oder des verwende ten Trennpapieres entspricht. Die ausgehärteten Filme sind gegen verdünnte Laugen und Säuren, Alkohol und Benzin weitgehend beständig. Die erhaltenen Oberflächen sind bewitterungsfest, d.h. sie zeigen unter Bewitterungsbedingungen weder Verfärbungen noch Veränderungen der Oberfläche, wie etwa Versprödung oder Rißbildung.

Aufgrund dieser Eigenschaften werden diese härtbaren Folien auf Acrylatcopolymerisatbasis insbesondere zur Herstellung von Fassadenverkleidungen verwendet. Als flächigen Werkstoff, der mit diesen Polymerisatfolien beschichtet wird, verwendet man insbesondere aufgrund des niedrigen spezifischen Gewichtes und der guten Verformbarkeit Bleche aus Aluminium oder Aluminiumlegierungen. Die Folien können dabei unpigmentiert vorliegen und die Farbe des gegebenenfalls eloxierten Aluminiums durchscheinen lassen. Sie können aber auch pigmentiert sein, so daß durch Verwendung von in geeigneter Weise pigmentierten, wärmehärtbaren Folien auf Acrylatcopolymerisatbasis dekorative Oberflächenbeschichtungen erzielt werden können.

Der Verbund der aus dem Stand der Technik bekannten Acrylatcopolymerisatfolien auf flächigen Werkstoffen, wie Holzwerkstoffplatten, Schichtpreßstoffplatten oder Metallblechen, ist gut. Die Haftung der Folien auf Metallblechen kann zusätzlich durch eine geeignete Oberflächenbehandlung der Fläche weiter verbessert werden. Aluminiumbleche können mit Chromschwefelsäurelösungen geätzt werden. Die Haftung wird zusätzlich verbessert, wenn man auf die so vorbehandelten Oberflächen an sich bekannte Primer, wie z.B. Primer auf Epoxidharzbasis, aufbringt.

Bei der Herstellung von Fassadenverkleidungen beschichtet man zunächst die für die Oberflächenverkleidung ausgewählten Bleche mit den Kunststoffolien und verformt in einem zweiten Arbeitsschritt die erhaltenen beschichteten Bleche zu den gewünschten Formteilen. Die Beschichtung der Bleche vor ihrer Verformung hat sich u.a. deshalb als zweckmäßig erwiesen, weil die Beschichtung eines Bleches mit ebener Oberfläche einfacher vorzunehmen ist und Oberflächenfehler bei der Beschichtung, wie z.B. Streifenbildung, leichter vermieden werden können. Es ist außerdem möglich, durch Verwendung strukturierter Trennpapiere oder strukturierter Preßbleche der Oberfläche der Beschichtung eine über die ganze Fläche einheitliche Oberflächenstruktur zu verleihen.

Die Verformung der beschichteten Bleche erfolgt, um Fassadenelemente, z.B. in Kassettenform, zu erhalten, welche verdeckt Aussteifungskonstruktionen und Aufhängevorrichtungen aufweisen.

Bei der Verformung der beschichteten Bleche werden bedingt durch die Abkantungswinkel an die Elastizität der ausgehärteten Oberflächenvergütungsschichten hohe Anforderungen gestellt. Auch bei engen Biegeradien dürfen die Vergütungsschichten weder einreißen noch abblättern, da derartige Fehlstellen bei der Bewitterung Anlaß zur Ausbildung von Korrosion sein können.

Der Erfindung liegt die Aufgabe zugrunde, noch wärmehärtbare oder bereits ausgehärtete, für die Oberflächenbehandlung von Metallblechen geeignete Folien auf Acrylatbasis zu finden, welche bezüglich ihrer Flexibilität und Reißdehnung gegenüber den aus dem Stand der Technik bekannten Folien verbessert sind. Die Reißdehnung soll dabei insbesondere derart verbessert sein, daß es möglich ist, beschichtete Bleche abzukanten und zu biegen, wobei die Beschichtungen einer Biegung um einen Dorn standhalten sollen, dessen Durchmesser der doppelten Blechdicke entspricht.

Erfindungsgemäß wird diese Aufgabe durch eine entsprechende Modifizierung der bekannten Folien auf Acrylatcopolymerisatbasis gelöst.

Ein Gegenstand der Erfindung ist somit eine Folie auf der Basis eines wärmehärtbaren oder ausgehärteten Acrylatcopolymerisates zur Oberflächenvergütung flächiger Werkstoffe, insbesondere von Metallblechen, mit erhöhter Reißdehnung, mit dem Kennzeichen, daß die Folie 20 bis 60 Gew.-% eines Gemisches aus einem hydroxyfunktionellen Polyacrylat eines OH-Äquivalentgewichtes von etwa 200 bis 600 und einem Polyisocyanat eines Polyisocyanat-Äquivalentgewichtes von etwa 150 bis 230 und/oder die hieraus durch Umsetzung gebildeten Polyacrylaturethane enthält, wobei im Gemisch das hydroxyfunktionelle Polyacrylat und das Isocyanat in, bezogen auf reaktive Gruppen, etwa äquivalenten Mengen vorliegen.

Eine bevorzugte Ausführungsform dieses Erfindungsgegenstandes ist dadurch gekennzeichnet, daß die Folie ein hydroxyfunktionelles Polyacrylat eines OH-Äquivalentgewichtes von ca. 400 bis 600 und ein aliphatisches Polyisocyanat eines Isocyanat-Äquivalentgewichtes von etwa 170 bis 200 enthält.

Geeignete hydroxyfunktionelle Polyacrylate mit dem geforderten OH-Äquivalentgewicht sind im Handel erhältlich und werden z.B. unter der Bezeichnung Macrynal VS angeboten. Es handelt sich dabei um ein polyisocyanatvernetzendes, urethanmodifiziertes Acrylharz. Die Viskosität einer 70 %igen Lösung der hydroxyfunktionellen Polyacrylate in Butylacetat/Testbenzin (1:2) beträgt etwa 60 mPa.s.

Als Polyisocyanat wird vorzugsweise ein aliphatisches Polyisocyanat verwendet. Auch hierbei handelt es sich um im Handel erhältliche Produkte. Beispiel eines entsprechenden aliphatischen Polyisocyanates ist das im Handel befindliche Produkt Desmodur N 100, welches einen NCO-Gehalt von etwa 22 %, ein Äquivalentgewicht von etwa 191 und eine Viskosität von ca. 8000 bis 12 000 mPa.s hat. Es handelt sich dabei insbesondere um Hexamethylendiisocyanat.

Es ist dem Fachmann verständlich, daß das hydroxyfunktionelle Polyacrylat und das Polyisocyanat in solchen Mengen verwendet werden sollen, daß, bezogen auf reaktive Hydroxyl- und Isocyanatgruppen, beide Verbindungen in etwa einander entsprechenden Mengen vorliegen. Enthält das zu modifizierende Copolymerisat auf Acrylatbasis zusätzlich freie Hydroxylgruppen, kann die Menge an zuzusetzendem Polyisocyanat entsprechend erhöht werden. Ein solcher chemischer Einbau des zur Modifizierung verwendeten Polyurethans in das Gerüst des Acrylatcopolymerisates ist durchaus erwünscht.

Die Modifizierung der Folie mit dem Gemisch aus hydroxyfunktionellem Polyacrylat und Polyisocyanat erfolgt in solchen Mengen, daß die Folie etwa 20 bis 60 Gew.-% der Polyurethanbildner enthält. Unterschreitet man diesen Gehalt, kann der Grad der gewünschten Flexibilisierung zu gering sein. Überschreitet man einen Anteil von 50 Gew.-%, treten die Eigenschaften der Acrylatfolie gegenüber denen des gebildeten Polyurethans in den Hintergrund.

Die Folien sind klar, durchscheinend und lassen den Untergrund des beschichteten Werkstoffes erkennen. Sie können auch mit Holzmaserdekoren rückseitig bedruckt werden. Zur Erzielung besonders dekorativer Effekte ist es auch möglich, in den Copolymerisaten lösliche Farbstoffe zuzugeben. Die Folien können jedoch auch Pigmente enthalten und dadurch ihre Transparenz verlieren. Zur Erzielung metallischer Effekte besonders geeignete Pigmente sind Pigmente auf Glimmerbasis, welche auf ihrer Oberfläche Metalloxide aufweisen. Solche Pigmente sind unter der Bezeichnung Iriodin-Pigmente im Handel. Bei Verwendung dieser Pigmente lassen sich besondere und erwünschte Metalleffekte erzielen.

Ein weiterer Gegenstand der Erfindung besteht in dem Verfahren zur Herstellung der erfindungsgemäßen Folie mit dem Kennzeichen, daß man die Lösung des wärmehärtbaren Acrylatcopolymerisates und die Lösung des hydroxyfunktionellen Polyacrylates und des Isocyanates in den gewünschten Mengen vermischt, die Folie durch Vergießen der gemeinsamen Lösung und Verdunsten des Lösungsmittels in an sich bekannter Weise herstellt und gegebenenfalls während oder nach der Folienbildung das Verfahrensprodukt in einem Temperaturbereich von 40 bis 150°C aushärtet.

Das hydroxyfunktionelle Polyacrylat und das Isocyanat werden vorzugsweise in den gleichen Lösungsmitteln wie das Acrylcopolymerisat gelöst und nach dem Vermischen zur Folienbildung auf eine umlaufende abhäsive Trägerbahn aufgegossen. Das Lösungsmittel wird abgedunstet und man erhält in an sich bekannter Weise eine Folie, welche zur Oberflächenbeschichtung insbesondere von Metallblechen besonders geeignet ist und eine hohe Flexibilität aufweist, die auch Abkantungen von Blechen mit geringen Biegeradien zuläßt.

Das erfindungsgemäße Verfahren gestattet somit die Herstellung noch härtbarer Folien oder bereits ausgehärteter Folien auf Acrylatcopolymerisatbasis.

Werden die Folien unter schonenden Bedingungen hergestellt und sind deshalb noch härtbar, werden diese zur Oberflächenvergütung auf die Metallbleche bei Temperaturen von 130 bis 160°C und einem Druck von 5 bis 10 N/mm² aufgepreßt. Der Preßdruck wird für eine Zeitdauer von etwa 5 bis 10 Minuten aufrechterhalten. Dabei empfiehlt es sich, die Abkühlung der beschichteten Bleche unter Aufrechterhaltung des Druckes vorzunehmen. Bei Verwendung strukturierter Preßbleche kann eine gewünschte Profilierung der Oberfläche erzielt werden.

Wie gezeigt, ist es aber auch möglich, die Folien auf Acrylatcopolymerisatbasis bereits im Verlauf ihrer Herstellung auszuhärten. Die Folien verlieren dabei allerdings ihre Fähigkeit, auf der Oberfläche der Metallbleche bei einer Verpressung zu haften. Es ist deshalb notwendig, die zu vergütenden Metallbleche mit an sich bekannten geeigneten Kaschierklebstoffen, z.B. auf Polyester-, Polyacrylat- oder Polyurethanbasis zu versehen. Die Kaschierung der Metallbleche erfolgt entweder kontinuierlich in Coil-Coating-Anlagen oder diskontinuierlich auf Blechabschnitten. Zur Erzielung einer strukturierten Oberfläche der Beschichtung wird die Lösung der Folienbildner auf einen entsprechend profilierten abhäsiven Träger aufgegossen, so daß die gewünschte Oberflächenprofilierung bereits bei der Folienbildung bewirkt wird.

Die Erfindung betrifft schließlich die Verwendung der erfindungsgemäßen Folien zur Oberflächenvergütung von Metallblechen, insbesondere Blechen aus Stahl und Aluminiumlegierungen. Sie betrifft insbesondere die Beschichtung von Blechen, welche für die Herstellung von Fassadenelementen bestimmt sind. Infolge der hohen Reißdehnung der Beschichtungen ist es möglich, die Bleche mit engen Biegeradien zu verformen und abzukanten und die gewünschten Profile und Fassadenelemente herzustellen.

In den folgenden Beispielen wird die erfindungsgemäße Modifizierung der Acrylatcopolymerisate) die Herstellung von Folien hieraus und die Prüfung der anwendungstechnischen Eigenschaften ausgehärteter Oberflächenschichten näher erläutert.

### Beispiel 1 nicht erfindungsgemäß

Ein Gemisch aus
267 g Methylenchlorid/Methanol (Vol.-Verhältnis 94/6)
51 g Butylacrylat
6 g Hydroxymethylmethacrylat
1,8 g Allylmethacrylat
wird mit 0,15 g Azoisobuttersäuredinitril zu einem elastomeren Kautschuk polymerisiert.

Diesem Copolymerisat A wird durch Zugabe von
245 g Methylmethacrylat
38 g Butylmethacrylat
23 g Methylacrylat
23 g N-Methoxymethylmethacrylamid
8 g Methacrylamid
12 g Hydroxyethylmethacrylat
36 g Stearylmethacrylat
11 g Butylacrylat
mit 3 g Azoisobuttersäuredinitril als Katalysator unter Zugabe von 300 g Lösemittelgemisch Methylenchlorid/Methanol (Vol.-Verhältnis 94/6) während der Reaktion ein hartsprödes Matrixpolymerisat B aufgepfropft.

Aus der erhaltenen Gießlösung, die auch nachträglich pigmentiert werden kann, läßt sich durch Entfernen des Lösemittels eine trägerfreie Folie herstellen.

Diese Folien werden unter üblichen Schichtstoffpreßbedingungen bei 130 bis 160°C, etwa 2 bis 10 N/mm², bei einer Preßzeit unter Druck von 10 bis 40 Minuten und Rückkühlung auf ein Aluminiumblech aufgepreßt und ausgehärtet.

### Beispiel 2 erfindungsgemäß

Zusammensetzung des modifizierten Acrylharzes:
100 g Harzlösung gemäß Beispiel 1
17 g hydroxyfunktionelles Acrylatharz, OH-Äquivalentgewicht ca. 515 (fest), im Handel erhältlich unter der Bezeichnung Macrynal VSM 1535
5 g Polyisocyanat, im Handel erhältlich unter der Bezeichnung Desmodur N 100
50 g Methylenchlorid
7 g Pigment Iriodin 300 Goldperl
2 g Pigment Iriodin 103 Silberperl
1 g Aluminiumpaste TL 475
1 g Rußpaste

Die Anfangsviskosität der Harzlösung beträgt etwa 700 mPa.s. Sie steigt innerhalb einiger Tage an und stabilisiert sich nach einer Woche mit ca. 1900 mPa.s.

Der ursprüngliche theoretische NCO-Gehalt von 0,7 reduziert sich innerhalb von 72 Stunden auf < 0,01 %.

Aus der Harz lösung läßt sich auch nach längerer Zeit, unbeeinflußt vom Viskositätsanstieg und urethanbildender Isocyanatreaktion, die erfindungsgemäße Folie gießen.

Es werden 200 g der Harzlösung mit einer Rakel auf einen geeigneten Gießträger oder ein Trennpapier aufgetragen. In einem Trockenkanal wird bei 40 bis 150°C das Lösemittel abgedunstet und die Folie getrocknet. Der Gehalt an Restflüchtigem beträgt < 1 % (10 Minuten, 160°C).

Nach dem Abziehen vom Träger erhält man eine eloxalfarbene, metallisch aussehende Folie von etwa 60 µm Stärke. Diese Folie hat eine wesentlich höhere Elastizität und Reißdehnung im Vergleich zu Folien nach Beispiel 1. Die Folie ist bereits vernetzt und ausgehärtet und dadurch unlöslich in organischen Lösemitteln.

Zur Vergütung eines Aluminiumbleches, das dafür durch Vorbehandlung chromatiert und gegebenenfalls mit einem geeigneten Primer oder einem heißaktivierbaren Klebstoff versehen ist, wird in eine beheizbare Presse folgender Aufbau eingelegt:
Preßpolster
Preßblech mit Schliffstruktur
erfindungsgemäße Folie
Aluminiumblech, wie oben beschrieben
Trennfolie
Preßblech
Preßpolster

Die Verpressung erfolgt in einer Etagenpresse bei einem Druck von 10 N/mm², einer Temperatur von 145°C und einer Preßzeit von 20 Minuten. Das Preßgut wird unter Druck rückgekühlt und der Presse entnommen.

Es wird ein Aluminiumblech erhalten mit gleichmäßiger, eloxalfarbener und metallisch aussehender Oberfläche.

Das mit der erfindungsgemäßen Folie beschichtete Blech kann um 180°C um einen Dorn gebogen werden, dessen Durchmesser 2 Blechstärken entspricht. Es sind auch unter dem Mikroskop keine Risse oder Abblätterungen erkennbar. Biegt man ein mit einer Folie auf Acrylatcopolymerisatbasis nach dem Stand der Technik beschichtetes Blech, wird beim Biegen um einen Dorn die Beschichtung beschädigt, wenn der Dorn einen Biegeradius von weniger als 5 Blechstärken aufweist.

Die Ergebnisse der Kurzbewitterung zeigen, daß die gute Bewitterungsfestigkeit der Beschichtung erhalten geblieben ist.

Beispiel 3 erfindungsgemäß

Zusammensetzung der modifizierten Harzlösung:
100 g Harzlösung gemäß Beispiel 1
22 g hydroxyfunktionelles Acrylharz, OH-Äquivalentgewicht ca. 515 (fest), im Handel unter der Bezeichnung Macrynal VSM 1535 erhältlich
6,5 g Polyisocyanat, im Handel unter der Bezeichnung Desmodur N 100 erhältlich
58 g Methylenchlorid
10 g Pigmentgemisch nach Eloxalfarbton C 32
1 g Rußpaste

Die Anfangsviskosität der Harzlösung beträgt etwa 600 mPa.s. Sie steigt innerhalb einiger Tage an und stabilisiert sich nach einer Woche mit ca. 1700 mPa.s.

Der ursprüngliche theoretische NCO-Gehalt von 0,7 % reduziert sich innerhalb von 72 Stunden auf < 0,01 %.

Aus der Harzlösung läßt sich auch nach längerer Zeit, unbeeinflußt vom Viskositätsanstieg und urethanbildender Isocyanatreaktion, die erfindungsgemäße Folie gießen.

Es werden 200 g der Harzlösung mit einer Rakel auf einen geeigneten Gießträger oder ein Trennpapier aufgetragen. In einem Trockenkanal wird bei 40 bis 150°C das Lösemittel abgedunstet und die Folie getrocknet. Der Gehalt an Restflüchtigem beträgt < 1 % (10 Minuten, 160°C).

Nach dem Abziehen vom Träger erhält man eine eloxalfarbene, metallisch aussehende Folie von etwa 60 μm Stärke. Diese Folie hat eine wesentlich höhere Elastizität und Reißdehnung im Vergleich zu Folien nach Beispiel 1. Die Folie ist bereits vernetzt und ausgehärtet und dadurch unlöslich in organischen Lösemitteln.

Zur Vergütung eines Aluminiumbleches, das dafür durch Vorbehandlung chromatiert und gegebenenfalls mit einem geeigneten Primer oder einem heißaktivierbaren Klebstoff versehen ist, wird in eine beheizbare Presse folgender Aufbau eingelegt:
Preßpolster
Preßblech mit Schliffstruktur
erfindungsgemäße Folie
Aluminiumblech, wie oben beschrieben
Trennfolie
Preßblech
Preßpolster

Die Verpressung erfolgt in einer Etagenpresse bei einem Druck von 10 N/mm², einer Temperatur von 145°C und einer Preßzeit von 20 Minuten. Das Preßgut wird unter Druck rückgekühlt und der Presse entnommen.

Es wird ein Aluminiumblech erhalten mit gleichmäßiger, eloxalfarbener und metallisch aussehender Oberfläche.

Die Reißdehnung der Beschichtung und die Bewitterungsfestigkeit entsprechen den Angaben in Beispiel 2.

**Ansprüche**

1. Folie auf der Basis eines wärmehärtbaren oder ausgehärteten Acrylatcopolymerisates zur Oberflächenvergütung flächiger Werkstoffe, insbesondere von Metallblechen, mit erhöhter Reißdehnung, dadurch gekennzeichnet, daß die Folie 20 bis 60 Gew.-% eines Gemisches aus einem hydroxyfunktionellen Polyacrylat eines OH-Äquivalentgewichtes von etwa 200 bis 600 und einem Polyisocyanat eines Polyisocyanat-Äquivalentgewichtes von etwa 150 bis 230 und/oder die hieraus durch Umsetzung gebildeten Polyacrylaturethane enthält, wobei im Gemisch das hydroxyfunktionelle Polyacrylat und das Isocyanat in, bezogen auf reaktive Gruppen, etwa äquivalenten Mengen vorliegen.

2. Folie nach Anspruch 1, dadurch gekennzeichnet, daß sie ein hydroxyfunktionelles Polyacrylat eines OH-Äquivalentgewichtes von ca. 400 bis 600 und ein aliphatisches Polyisocyanat eines Isocyanat-Äquivalentgewichtes von etwa 170 bis 200 enthält.

3. Verfahren zur Herstellung einer Folie nach Anspruch 1 oder 2, dadurch gekennzeichnet, daß man die Lösung des wärmehärtbaren Acrylatcopolymerisates und die Lösung des hydroxyfunktionellen Polyacrylates und des Isocyanates in den gewünschten Mengen vermischt, die Folie durch Vergießen der gemeinsamen Lösung und Verdunsten des Lösungsmittels in an sich bekannter Weise herstellt und gegebenenfalls während oder nach der Folienbildung das Verfahrensprodukt in einem Temperaturbereich von 40 bis 150°C aushärtet.

4. Verwendung einer Folie nach Anspruch 1 oder 2 zur Oberflächenvergütung von Metallblechen, insbesondere Blechen aus Aluminiumlegierungen und Stahl.